# EUROPEAN PATENT SPECIFICATION

(11) **EP 2 122 096 B1**
(45) Date of publication and mention of the grant of the patent: **02.07.2014**
(21) Application number: 08709937.0
(22) Date of filing: 31.01.2008
(51) Int. Cl.: E05F 15/10, E05F 15/12, E05F 15/20

(54) **MOTOR UNIT FOR A GATE ACTUATING SYSTEM**
MOTORAGGREGAT FÜR EIN TORBETÄTIGUNGSSYSTEM
UNITÉ DE MOTEUR POUR SYSTÈME D'ACTIONNEMENT DE GRILLE

(30) Priority: 05.02.2007 IT TV20070014
(43) Date of publication of application: 25.11.2009
(73) Proprietor: NICE S.P.A., 31046 Oderzo (Treviso) (IT)
(72) Inventor: MARCHETTO, Oscar, I-31046 Oderzo (Treviso) (IT)
(74) Representative: Dragotti, Gianfranco
(86) International application number: PCT/IB2008/050358
(87) International publication number: WO 2008/096299

(56) References cited:
- WO-A-2006/051060
- DE-A1- 19 936 443
- FR-A- 2 705 392
- FR-A- 2 858 995

## Description

The invention relates to a motor unit used as a component in an actuating system for moving gates, in particular but not exclusively gates of the leaf type, to which reference will be made by way of example.

The actuating systems commonly marketed for a two-leaf gate generally consist of three types.

The first type (not shown) is of the "buried" type, i.e. the entire motor is situated inside a special container and buried underneath the gate. It exerts its action directly on the bottom edge of the gate.

The second type (not shown) acts on the gate by means of a hinged arm and the motor is fixed to the surrounding wall or to the support column.

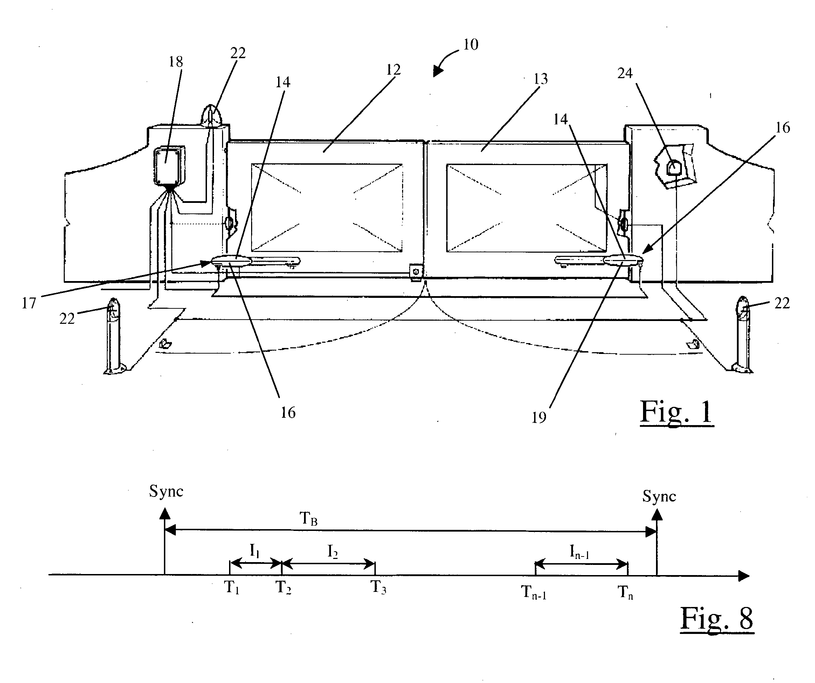

With reference to Fig. 1, the third known actuating system is denoted by 10 and acts on a gate with two leaves 12, 13 by means of a rotating actuating screw. For each leaf 12 and 13 there is a motor unit 17 and 19 which operates it. By means of a speed-reducing gear unit an electric motor causes rotation of the actuating screw which transmits the movement to the leaf by means of a suitably shaped (female) screw nut. The whole assembly is contained inside two protective housing half-shells 14, 16 which have an elongated shape.

A control unit 18 is fixed to the surrounding wall and is wired to all the other devices present in the actuating system, namely the pair of motor units 17 and 19, two pairs of photocells 22, a flashing signalling lamp 23 and a wall-mounted command device 24 (basic automated system, with the smallest number of devices).

All the devices must be operated by the control unit 18 and therefore - as can be seen in Fig. 1 - the system must envisage a large number of wires entering and leaving the control unit 18 itself, i.e. usually, at least 8 - 10 pairs of wires.

More precisely in Fig. 1 three wires are required for the operating device 24, two wires are required for the flashing lamp 23, five wires are required for the photocells 20 and three wires are required for the motors 17 and 19, giving a total of at least thirteen wires leaving the control unit 18. And the system according to Fig. 1 has a minimal configuration.

Owing to the safety regulations, the devices envisage are destined to increase exponentially. In fact it is common for systems to have 3 or 4 pairs of photocells, a flashing lamp, 2 or 3 command devices, 1 or 2 sensing edges as well as, obviously, 1 or 2 motors.

A smaller number of wiring cables is obtained by using a bus connection between the components of the actuating system. The devices are connected using two wires and consequently the control unit 18 may have a smaller number of outgoing wires, i.e. two wires for the motor units 17 and 19, two wires for the flashing lamp 23, two wires for the photocells 20 and two wires for an operating device 24, giving a total of 8 wires. Each device, and therefore each pair of wires, has a corresponding connection terminal in the control unit 18.

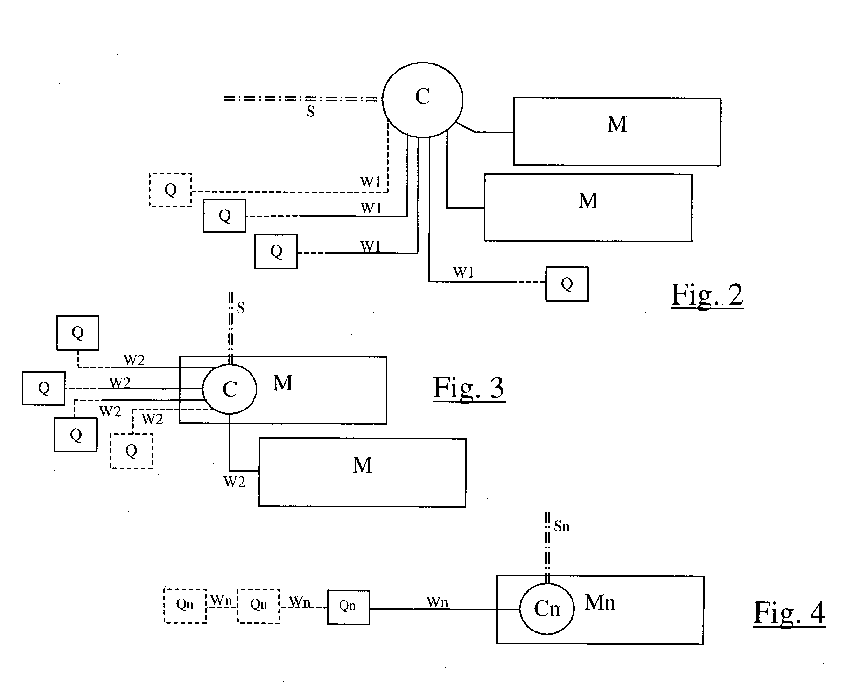

Schematically the known systems described are shown in order in Figs. 2 and 3. A control unit C is powered by a line S and wired via (several) cables W1 or W2 to components Q of the system, two of which are motor units M. The complexity of the wiring network is evident, whether a bus connection is used or not, and in particular taking into account the fact that the connections W1 on average have three wires and the connections W2 have two wires.

In the systems such as that shown in Fig. 1 the motor units 17, 19 are pivotably mounted on the surrounding wall by means of suitable brackets and move together with the leaf 12, 13. The type of electric cable which connects the motor units 17, 19 to the control unit 18 must withstand the particular operating conditions, i.e. repeated bending with each movement in any weather conditions (cycles of sun, cold, ice, etc.). For this reason this cable has a notable cross-section and large amount of protective sheathing which result in it being not very flexible.

Therefore, if it is attempted to incorporate the control unit 18 inside a motor unit 17, 19 in order to reduce the overall wiring of the system, considerable technical difficulties are encountered, apart from the increased costs, such as the fact that:
(i) the dimensions of the control unit 18 are anything but negligible and attempting to incorporate it in a motor unit 17, 19 would mean altering completely the form of the motor unit;
(ii) a motor unit 17, 19 would have to house a bundle of 8-10 pairs of cables which, in connection with that stated above, would have to be flexible enough to bend during movement of the leaves 12, 13 and withstand adverse weather conditions over time.

No less important is the external aesthetic appearance of the motor which must in any case be attractive and incorporating the control unit would have a completely negative effect.

It is also necessary to mention the difficulties of installing such a large number of outgoing cables from the motor unit, with a probable increase in the risk of errors.

It must also be emphasized that the elongated form of the motor is not determined simply by aesthetic considerations but also by structural requirements. In fact it must:
(i) have a longitudinal length sufficient to contain an actuating screw which must be long enough to cause the leaf to move through an arc of 110 to 120 degrees,
(ii) and have a minimum transverse volume, since otherwise it would complicate installation of the motor unit in the case where the wall or enclosure on which it is fixed are arranged orthogonally to the gate in the closed position.

The object of the invention is to provide a motor unit, in particular, but not exclusively, for gates of the leaf type, which reduces the wiring of the actuating system and simplifies installation thereof.

This object is achieved with a motor unit used in an actuating system for moving gates, in particular gates of the leaf type, comprising:
- a motor for moving the gate enclosed in a housing;
- a control unit connected to the motor for managing operation thereof and contained inside the housing, characterized in that
it comprises only one bifilar line for the transmission of signals between the control unit and the peripheral devices.

Schematically the system according to the invention can be seen in Fig. 4. A control unit Cn is arranged inside the motor unit Mn, is powered by a line Sn (230V or 24V) and is wired via a single bifilar cable to components Qn of the system, which are operationally the same as those in Figs. 2 and 3. The simplification of the overall wiring is evident and represents a major advantage of the invention.

The motor unit Mn according to the invention advantageously uses an innovative technology which has been developed by the Applicant - forming the subject of a separate patent application - and by means of which all the peripheral devices of the system are connected in cascade only via the wire Wn. Details will be provided below.

Alternatively any interfacing system/protocol between various functional components arranged in cascade (for example in daisy chain) or via a communication bus may be used.

The advantages of the invention will emerge more clearly from the following description of a preferred embodiment, illustrated in the accompanying drawings in which:
Fig. 1 shows a known actuating system;
Figs. 2 and 3 show block diagrams of known actuating systems;
Fig. 4 shows a block diagram of a motor unit according to the invention;

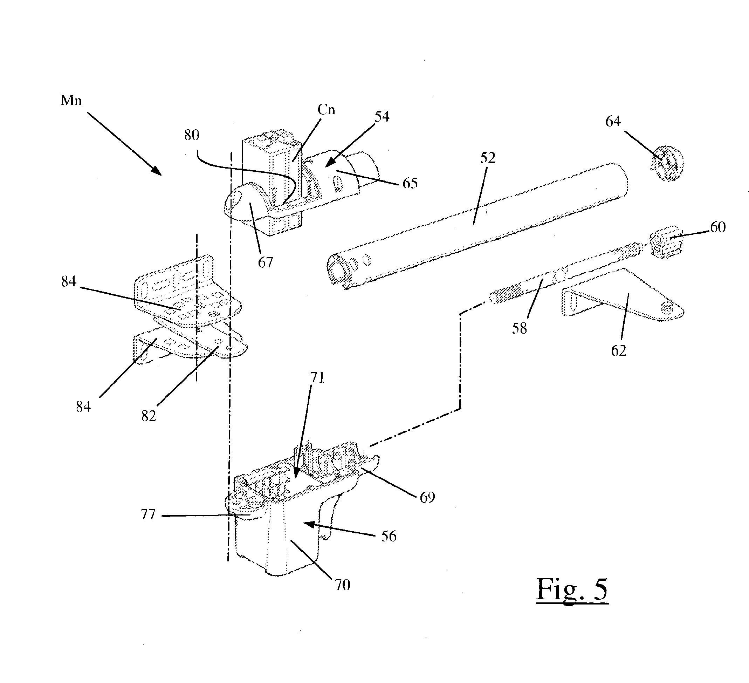

Fig. 5 shows an exploded view of the main components of the motor unit according to Fig. 4;
Fig. 6 shows a detail of the motor unit according to Fig. 4;
Fig. 7 shows another detail of the motor unit according to Fig. 4;
Fig. 8 shows a time diagram of the signals sent by the motor unit according to the invention.

A motor unit according to the invention is denoted by Mn. It comprises an external housing formed by an upper half-shell 54 and a bottom half-shell 56 connected to the end of a hollow cylindrical section (bar) 52. An actuating worm screw 58 (which can be rotationally operated by an electric motor, not shown) is present inside the section 52 and is engaged by a sliding piece 60 with a counter-threaded female thread which is thus able to travel along it. The sliding piece 60 is joined to a bracket 62 for fastening to the leaf of a gate. A cover 64 closes the section 52.

The upper half-shell 54 and the bottom half-shell 56 mate along one edge and are gripped together. The former is composed of a first quarter-sphere tail part 67 and a dome-shaped cover 65, and the latter is composed of a second quarter-sphere tail part 77, a parallelepiped hollow box 70 with a cavity 71 and an end piece 69. Following assembly, the two tail parts 67, 77 are positioned on top of each other and the cover 65 covers the box 70 and the end piece 69. By means of coaxial through-holes in the tail parts 67, 77, the motor unit Mn may be hinged with a support plate 82 arranged between two support brackets 84 fixed to the wall.

The cover 65 has a through-opening 80, the mouth of which coincides substantially with the internal cross-section of the box 70 so that the interior of the latter is accessible through the former. This access is exploited so as to be able to insert and house a control unit Cn inside the box 70.

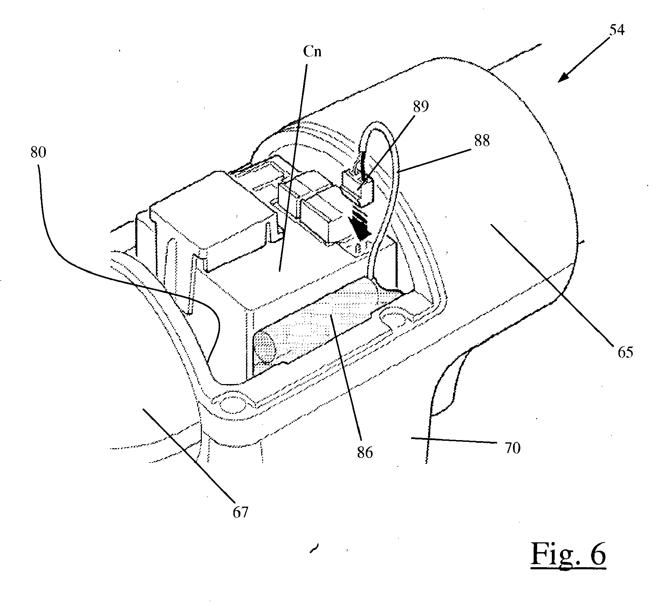

This arrangement is visible more clearly in Fig. 6 where it can be seen that an (optional) back-up battery 86 can be inserted inside the box 70 - alongside the control unit Cn - so as to power the electric power and/or the control unit Cn in the event of a blackout. Owing to the very close arrangement together of the control unit Cn and the battery 86, it is possible to provide a very short and convenient connection between them using a short conductor 88 and a quich-action connector 89 (for example a so-called "faston" terminal). It should be noted that the battery (and also the control unit Cn) are protected in an optimum manner inside the box 70 which may be sealed or reinforced against water or impact.

The bottom of the box 70 is provided with three holes, one for the 220 V power supply, one for the two wires of the bus leading to the peripheral components and one for the two wires of the bus leading to the second motor.

The two conductors of the bus form an apolar bifilar line, namely one which does not impose a predetermined connection polarity on the devices connecter to it. These devices, such as the motor unit, are equipped with interfacing/rectifying and filtering means such that they are unaffected by the voltage/current polarity on the bus and may therefore be connected to the bus wires without a specific correspondence of connection for the latter. The filtering means are used to obtain from the bus a stabilized power supply voltage.

It is clear that the possibility of connecting all the peripheral devices of the automated system using only two wires facilitates and speeds up the work of the installation personnel.

A preferred embodiment of the communications protocol of the bifilar line is now described (see Fig. 8).

Each device Qn, depending on its characteristics, is designed to transmit to the control unit Cn a response signal only in a reserved time window after receiving a signal Sync introduced by the control unit Cn on the bifilar line (bus) so as to avoid possible collisions. In a window Iᵢ only one device Qn transmits, occupying the bus. Moreover, the control unit (Cn) is adapted, by means of known means:
- to transmit on the bifilar line a synchronizing signal (Sync);
- to receive after the synchronizing signal (Sync) a response signal from each device (Qn) only in a reserved time window (Iᵢ) having a predefined position with respect to said synchronizing signal (Sync).

The time interval T_{B} between the two signals Sync, which for the sake of simplicity may be kept constant, defines the scanning period in which the control unit Cn checks/controls/actuates the status of the components in the system.

Tᵢ denotes an i-th instant between two signals Sync, while Iᵢ denotes the i-th time window within which a device Qn must respond/transmit so as to be correctly identified by the control unit Cn. The positions of the instants Tᵢ are advantageously (but not necessarily) predefined and invariable, and the duration of the windows Iᵢ depends on the functional characteristics of the i-th device Qn, which has the possibility of responding after each synchronizing signal Sync because it has a dedicated time interval Iᵢ.

A communications network is established such as to use therefore only one bifilar line to which the different peripheral devices (operating or command devices) may be connected.

The invention also relates to an actuating system for moving gates, in particular gates of the leaf type, comprising one or more motor units, two pairs of photocells, a flashing signalling lamp, a command device and a control unit, where the or each motor unit is designed in accordance with the characteristic features of the invention, as defined in the claims.

## Claims

1. Motor unit (Mn), used in an actuating system for moving gates, in particular gates of the leaf type, and comprising:
- a motor (Mn) with a rotary actuating screw (58) for moving the gate, enclosed in a protective housing (54, 56);
- a system control unit (Cn) connected to the motor, and adapted for exchanging signals with a plurality of peripheral devices which are disposed not to move with the leaf;
- means for pivotally fastening the motor to the leaf of the gate for a movement of the motor unit together the leaf;
- a bracket (82, 84) for pivotally mounting the motor to a wall or to a column in order to allow rotation of the motor unit respect to the wall or the column when the motor unit moves together the leaf; and
- a wired connection for connecting the control unit (Cn) to said plurality of peripheral devices (Qn);
**characterized in that**
the control unit (Cn) is contained inside a cavity in the protective housing (54, 56), so that the wired connection is bended when the motor unit moves together the leaf, and **in that**
the wired connection for connecting the control unit (Cn) to the peripheral devices is a single bifilar cable (Wn) for the transmission of signals between the control unit and the peripheral devices by means of a communication protocol using only two wires of the single bifilar cable (Wn), and the bifilar line (Wn) is an apolar bifilar line.

2. Unit according to Claim 1, in which the cavity is defined by the walls (70) of the housing.

3. Unit according to Claims 1 or 2, comprising a battery (86) designed to be arranged inside said cavity (70) and power the control unit.

4. Unit according to Claim 3, comprising a short conductor (88) and a quick-action connector (89) for connecting the battery (86) to the control unit.

5. Unit according to any one of the preceding claims, comprising interfacing/rectifying means in order to remain unaffected by the voltage/current polarity on the bifilar line and may therefore be connected thereto without a specific correspondence of connection.

6. Unit according to any one of the preceding claims, comprising filtering means for obtaining a stabilized power supply voltage from the bifilar line.

7. Unit according to any one of the preceding claims, in which the control unit (Cn) is adapted:
- to transmit on the bifilar line a synchronizing signal (Sync);
- to receive after the synchronizing signal (Sync) a response signal from each device (Qn) only in a reserved time window (Iᵢ) having a predefined position with respect to said synchronizing signal (Sync).

8. Actuating system for moving gates, in particular gates of the leaf type, comprising a control unit (Cn), one or more motor units (17, 19) according to any one of the preceding claims and a plurality of peripheral devices (Qn) disposed not to move with the leaf and comprising two pairs of photocells (22), one flashing signalling lamp (23) and a command device (24).

## Patentansprüche

1. Motoraggregat (Nn), verwendet in einem Betätigungssystem für bewegbare Tore, insbesondere Tore des Flügeltyps, und aufweisend:
- einen Motor (Mn) mit einer Drehbetätigungsschraube (58) zum Bewegen des Tores, welcher in einem Schutzgehäuse (54, 56) untergebracht ist;
- eine Systemsteuereinheit (Cn), welche an den Motor angeschlossen und zum Austauschen von Signalen mit einer Vielzahl von Peripheriegeräten eingerichtet ist, welche so angeordnet sind, dass sich diese mit dem Flügel nicht mitbewegen;
- Mittel zum drehbaren Befestigen des Motors an dem Flügel des Tores, sodass sich das Motoraggregat zusammen mit dem Flügel bewegt;
- einen Träger (82, 84) zum drehbaren Montieren des Motors an einer Wand oder an einer Säule, um eine Drehung des Motoraggregats bezüglich der Wand oder der Säule zu erlauben, wenn sich das Motoraggregat zusammen mit dem Flügel bewegt; und
- eine Kabelverbindung zum Anschließen der Steuereinheit (Cn) an die Vielzahl von Peripheriegeräten (Qn);
**dadurch gekennzeichnet, dass**
die Steuereinheit (Cn) innerhalb einer Aussparung in dem Schutzgehäuse (54, 56) enthalten ist, so dass die Kabelverbindung gebogen wird, wenn sich das Motoraggregat zusammen mit dem Flügel bewegt, und dadurch, dass
die Kabelverbindung zum Anschließen der Steuereinheit (Cn) an die Peripheriegeräte ein einzelnes zweiadriges Kabel (Wn) ist, für die Übertragung von Signalen zwischen der Steuereinheit und den Peripheriegeräten mittels eines Kommunikationsprotokolls, welches nur zwei Drähte des einzelnen zweiadrigen Kabels (Wn) verwendet, und wobei die zweiadrige Leitung (Wn) eine nichtpolare zweiadrige Leitung ist.

2. Aggregat gemäß Anspruch 1, in welchem die Aussparung durch die Wände (70) des Gehäuses definiert wird.

3. Aggregat gemäß Anspruch 1 oder 2, aufweisend eine Batterie (86), welche dazu konstruiert ist, innerhalb der Aussparung (70) angeordnet zu sein und die Steuereinheit mit Strom zu versorgen.

4. Aggregat gemäß Anspruch 3, aufweisend einen Kurzschlussleiter (88) und einen Schnellverbinder (89) zum Anschließen der Batterie (86) an die Steuereinheit.

5. Aggregat gemäß einem der vorherigen Ansprüche, aufweisend ein Verbindungs-/ Gleichrichtmittel, um von der Polarität der Spannung/des Stromes auf der zweiadrigen Leitung unbeeinflusst zu bleiben und demzufolge ohne eine spezifische Zuordnung der Verbindung an diese angeschlossen werden zu können.

6. Aggregat gemäß einem der vorherigen Ansprüche, aufweisend ein Filtermittel zum Gewährleisten einer stabilen Energieversorgungsspannung aus der zweiadrigen Leitung.

7. Aggregat gemäß einem der vorherigen Ansprüche, in welchem die Steuereinheit (Cn) dazu eingerichtet ist:
- auf die zweiadrigen Leitung ein Synchronisierungssignal (Sync) zu übertragen;
- nach dem Synchronisierungssignal (Sync) ein Antwortsignal von jedem Gerät (Qn) zu empfangen, ausschließlich in einem reservierten Zeitfenster (Iᵢ), das eine vorbestimmte Position bezüglich des Synchronisierungssignals (Sync) besitzt.

8. Betätigungssystem für bewegbare Tore, insbesondere Tore des Flügeltyps, aufweisend eine Steuereinheit (Cn), ein oder mehrere Motoraggregat(e) (17, 19), gemäß einem der vorherigen Ansprüche und eine Vielzahl von Peripheriegeräten (Qn), welche so angeordnet sind, dass sich diese nicht mit den Flügeln mitbewegen und zwei Paare an Photozellen (22), eine blitzende Signallampe (23) und ein Befehlsgerät (24) aufweisen.

## Revendications

1. Unité de moteur (Mn), utilisée dans un système d'actionnement pour déplacer des portails, en particulier des portails du type à battants, et comprenant :
- un moteur (Mn) avec une vis d'actionnement rotative (58) pour déplacer le portail, enfermé dans un logement de protection (54, 56) ;
- une unité de commande de système (Cn) connectée au moteur, et conçue pour échanger des signaux avec une pluralité de dispositifs périphériques qui sont disposés de manière à ne pas se déplacer avec le battant ;
- des moyens pour fixer de manière pivotante le moteur au battant du portail pour un déplacement de l'unité de moteur avec le battant ;
- un support (82, 84) pour monter de manière pivotante le moteur sur une paroi ou sur une colonne afin de permettre la rotation de l'unité de moteur par rapport à la paroi ou à la colonne lorsque l'unité de moteur se déplace avec le battant ; et
- une connexion câblée pour connecter l'unité de commande (Cn) à ladite pluralité de dispositifs périphériques (Qn) ;
**caractérisée en ce que**
l'unité de commande (Cn) est contenue à l'intérieur d'une cavité dans le logement de protection (54, 56), de sorte que la connexion câblée est pliée lorsque l'unité de moteur se déplace avec le battant, et **en ce que**
la connexion câblée pour connecter l'unité de commande (Cn) aux dispositifs périphériques est un câble bifilaire (Wn) unique pour la transmission de signaux entre l'unité de commande et les dispositifs périphériques au moyen d'un protocole de communication en n'utilisant que deux fils du câble bifilaire (Wn) unique, et la ligne bifilaire (Wn) est une ligne bifilaire apolaire.

2. Unité selon la revendication 1, dans laquelle la cavité est définie par les parois (70) du logement.

3. Unité selon la revendication 1 ou 2, comprenant une batterie (86) conçue pour être agencée à l'intérieur de ladite cavité (70) et pour alimenter l'unité de commande.

4. Unité selon la revendication 3, comprenant un conducteur court (88) et un connecteur à action rapide (89) pour connecter la batterie (86) à l'unité de commande.

5. Unité selon l'une quelconque des revendications précédentes, comprenant des moyens d'interfaçage/redressement afin qu'elle ne soit pas affectée par la polarité de la tension/du courant sur la ligne bifilaire et qu'elle puisse par conséquent être connectée à celle-ci sans une correspondance spécifique de connexion.

6. Unité selon l'une quelconque des revendications précédentes, comprenant des moyens de filtrage pour obtenir une tension d'alimentation stabilisée à partir de la ligne bifilaire.

7. Unité selon l'une quelconque des revendications précédentes, dans laquelle l'unité de commande (Cn) est conçue :
- pour transmettre, sur la ligne bifilaire, un signal de synchronisation (Sync) ;
- pour recevoir, après le signal de synchronisation (Sync), un signal de réponse de chaque dispositif (Qn) uniquement dans une fenêtre de temps réservée (Iᵢ) ayant une position prédéfinie par rapport au dit signal de synchronisation (Sync).

8. Système d'actionnement pour déplacer des portails, en particulier des portails du type à battants, comprenant une unité de commande (Cn), une ou plusieurs unités de moteur (17, 19) selon l'une quelconque des revendications précédentes et une pluralité de dispositifs périphériques (Qn) disposés de manière à ne pas se déplacer avec le battant et comprenant deux paires de cellules photoélectriques (22), une lampe de signalisation clignotante (23) et un dispositif de commande (24).
